# EUROPÄISCHE PATENTSCHRIFT

(11) **EP 0 771 683 B1**
(45) Veröffentlichungstag und Bekanntmachung des Hinweises auf die Patenterteilung: **27.10.1999**
(21) Anmeldenummer: 96113029.1
(22) Anmeldetag: 13.08.1996
(51) Int. Cl.: B60J 7/20

(54) **Aufbewahrungseinrichtung**
Storage device
Dispositif de rangement

(30) Priorität: 04.11.1995 DE 19541168
(43) Veröffentlichungstag der Anmeldung: 07.05.1997
(73) Patentinhaber: Bayerische Motoren Werke Aktiengesellschaft, 80788 München (DE)
(72) Erfinder: Siring, Harald, 81377 München (DE); Kokott, Jan Patrick, 81371 München (DE)

(56) Entgegenhaltungen:
- EP-A- 0 356 640
- DE-A- 1 505 474
- DE-C- 304 035
- FR-A- 1 572 209

## Beschreibung

Die Erfindung betrifft eine Aufbewahrungseinrichtung, mit zwei über eine verstellbare Trennwand volumenveränderlichen Aufbewahrungsräumen, insbesondere an einem Cabriolet oder dergleichen, mit den im Oberbegriff des Patentanspruches 1 angegebenen Merkmalen.

Eine derartige Aufbewahrungseinrichtung ist durch die DE-OS 15 05 474 bekannt, die zur Aufnahme eines Faltdaches einen von dem Kofferraum über eine höhenverstellbaren Trennwand abgeteilten Aufbewahrungsraum aufweist. Der nicht dargestellte Verstellmechanismus, der eine Höhenverstellung der Trennwand ermöglicht, dürfte vier Schiebeführungen in den Eckbereichen der Trennwand erfordern, die aufwendig zu fertigen sind und ein Verkanten der Führungen nicht ausschließen können.

Der Erfindung liegt die Aufgabe zugrunde, eine Aufbewahrungseinrichtung nach dem Oberbegriff des Patentanspruches 1 anzugeben, die in einfacher Weise ein klemmfreies Verstellen der Trennwand ermöglicht.

Diese Aufgabe ist durch die im Patentanspruch 1 angegebenen Merkmale gelöst. Durch die gelenkigen Verbindungen der drei die Trennwand bildenden Elemente und die schwenkbar abgestützten äußeren Elemente bilden die Elemente ein Viergelenk, das spiel- und klemmfrei verstellbar ist. Die Beweglichkeit des Viergelenks ist durch die Lage der Achsen und Schwenkachsen an die jeweiligen Einbauverhältnisse anzupassen. Verlaufen die Achsen und Schwenkachsen etwa parallel, kann durch eine geeignete Wahl des horizontalen und vertikalen Abstands zwischen den Schwenkachsen eine etwa quaderförmige Vergrößerung bzw. Verkleinerung der Aufbewahrungsräume erreicht werden. Die Aufbewahrungseinrichtung eignet sich besonders zur Verwendung an einem Cabriolet oder dergleichen, bei dem in einen Aufbewahrungsraum ein Faltverdeck oder Faltdach und in den anderen Aufbewahrungsraum Gepäck einzubringen sind. Ist in diesem Fall das Faltverdeck bzw. Faltdach geschlossen, können die drei Elemente der Trennwand in den zur Aufnahme des Faltdaches bzw. Faltverdecks vorgesehenen Aufbewahrungsraum verstellt werden und dadurch den zur Aufnahme von Gepäckstücken vorgesehenen Aufbewahrungsraum entsprechend vergrößern, wodurch in diesem Raum größere oder zusätzliche Gepäckstücke mitzuführen sind.

Vorteilhafte Ausgestaltungen der Erfindung sind Gegenstand von Unteransprüchen.

Zwei Ausführungsbeispiele der Erfindung werden anhand einer Zeichnung näher erläutert. Es zeigen
- Figur 1: ein erstes Ausführungsbeispiel in einer seitlichen Schnittansicht,
- Figur 2: ein zweites Ausführungsbeispiel in einer Figur 1 entsprechenden Ansicht und
- Figur 3: einen motorischen Antrieb zum Verstellen eines Elements der in Figur 2 dargestellten Aufbewahrungseinrichtung.

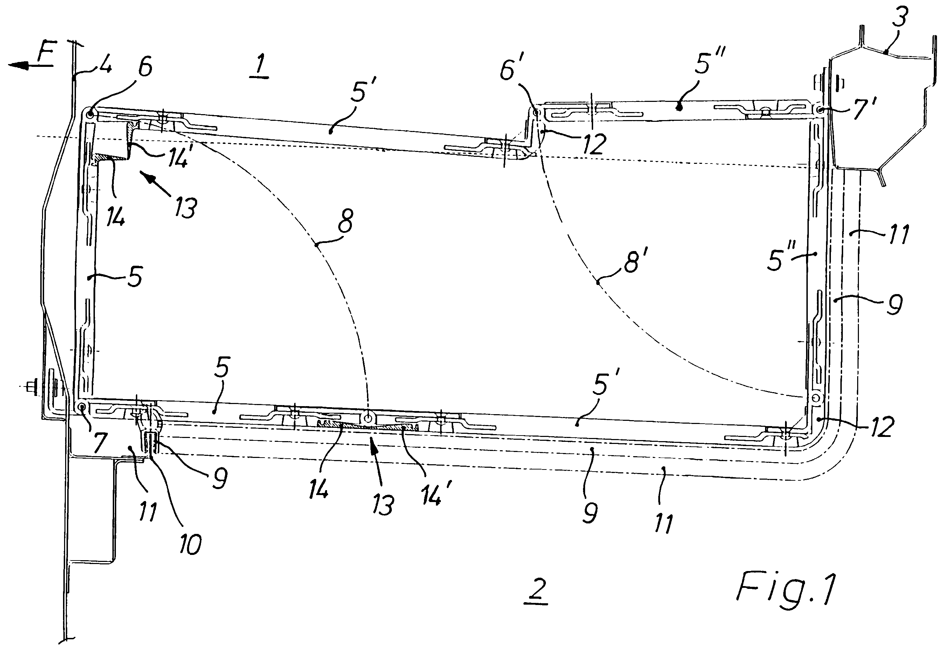

Das in Figur 1 dargestellte erste Ausführungsbeispiel einer Aufbewahrungseinrichtung ist an einem als Cabriolet ausgebildeten Fahrzeug vorgesehen und ermöglicht eine Volumenvergrößerung oder -verkleinerung des zur Aufnahme eines Faltverdecks vorgesehenen Aufbewahrungsraumes 1 und gleichzeitig eine Verkleinerung bzw. Vergrößerung eines zur Aufnahme von Gepäckstücken vorgesehenen zweiten Aufbewahrungsraumes 2. Der Aufbewahrungsraum 1 ist in nicht dargestellter Weise von oben von einem schwenkbaren Verdeckkastendeckel verschließbar. Der zur Aufnahme von Gepäckstücken vorgesehene Aufbewahrungsraum 2 ist hinter einem Querträger 3 - in der Figur rechts - von einem nicht dargestellten Kofferraumdeckel verschließbar, der schwenkbar an dem Querträger abgestützt ist. Der Verdeckkastendeckel ist ebenfalls an dem Querträger 3 schwenkbar abgestützt. Die Fahrtrichtung des Fahrzeugs nach vorne ist in der Figur durch einen Pfeil F dargestellt. Der Aufbewahrungsraum 1 ist im vorderen oberen Bereich des Aufbewahrungsraumes 2 hinter einer Querwand 4 vorgesehen, die den Fahrgastraum nach hinten begrenzt. Die beiden Aufbewahrungsräume 1, 2 sind über eine verstellbare Trennwand volumenveränderlich, die im wesentlichen aus drei plattenförmigen Elementen 5, 5', 5'' gebildet ist. Das mittlere Element 5' ist am vorderen und hinteren Endbereich jeweils um eine Achse 6, 6' mit dem vorderen äußeren Element 5 und dem hinteren äußeren Element 5'' schwenkbar verbunden. Das vordere äußere Element 5 ist um eine Schwenkachse 7 an der Rückseite der Querwand 4 schwenkbar befestigt. In ähnlicher Weise ist das hintere äußere Element 5'' an einer Schwenkachse 7' an der Vorderseite des Querträgers 3 schwenkbar befestigt, wobei die Schwenkachse 7' etwa um den Abstand zwischen der Schwenkachse 7 und der Achse 6 höher als die Schwenkachse 7 liegt. Der Längsabstand zwischen den Schwenkachsen 7, 7' entspricht etwa den zusammengesetzten Abständen zwischen den Achsen 6, 6' und der Achse 6' zur Schwenkachse 7'. In der dargestellten hochgestellten Lage des mittleren Elements 5' verlaufen die gedachten Verbindungsebenen zwischen den parallelen Achsen 6, 6' sowie zwischen der Achse 6' und der Schwenkachse 7' etwa parallel. Die Achse 6 befindet sich etwa über der Schwenkachse 7, wodurch das Element 5 nahezu vertikal gestellt ist. Alle Achsen 6, 6' und 7, 7' verlaufen parallel in Fahrzeugquerrichtung. In dieser hochgestellten Beladungsstellung ist das Faltverdeck dem Aufbewahrungsraum entnommen und geschlossen. Der zur Aufnahme von Gepäckstücken vorgesehene Aufbewahrungsraum 2 ist dadurch vergrößert und der nicht benötigte Aufbewahrungsraum 1 in seinem Volumen entsprechend vermindert. Durch strichpunktierte Kreisbögen 8, 8' ist angedeutet, daß durch entsprechendes Verschwenken der äußeren Elemente 5, 5'' die Elemente 5, 5', 5'' in eine untere Beladungsstellung verstellbar sind, in der die Elemente 5, 5' etwa horizontal und das Element 5'' etwa vertikal angeordnet ist. Die ein Viergelenk bildenden Elemente 5, 5', 5'' sind in der angegebenen Weise verstellbar, da die Schwenkachsen 7, 7' einen Abstand voneinander aufweisen, der geringer als die Summe der Abstände zwischen der Achse 6 und der Schwenkachse 7 sowie der Achse 6' zur Schwenkachse 7' und zwischen den Achsen 6, 6' ist. In der abgesenkten Beladungsstellung liegen die Elemente 5, 5', 5'' an einer Dichtung 9 an, die an einem zu den Elementen 5, 5', 5'' gerichteten Schenkel 10 einer Wasserrinne 11 befestigt ist. Die Wasserrinne 11 verläuft oben offen hinter der Querwand 4 in Querrrichtung des Fahrzeugs sowie seitlich von den Elementen 5, 5', 5'' nach hinten und im hinteren Bereich des Aufbewahrungsraumes 1 nach oben bis zu dem Querträger 3, wobei in diesem vertikalen Abschnitt die Wasserrinne 11 vorne offen ist. Die Achse 6' ist an dem in der Figur rechten Bereich des mittleren Elements 5' an einem nach oben gerichteten Schenkel 12 des Elements 5' ausgebildet. An der Achse 6 ist eine biegsame Dichtung 13 vorgesehen, die aus zwei über ein Filmscharnier verbundene Dichtungsteile 14, 14' besteht. Die Enden der Dichtungsteile 14, 14' sind so an dem Element 5 bzw. an dem mittleren Element 5' befestigt, daß die Dichtungsteile in der oberen und der unteren Beladungsstellung die in der Figur angegebenen Lagen einnehmen. In der unteren Beladungsstellung sind die Unterseiten der Dichtungsteile 14, 14' bündig mit den Elementen 5, 5' angeordnet und liegen im Bereich der Dichtung 9 dichtend an. Die Elemente 5, 5', 5'' sind von einem nicht dargestellten Motorantrieb verstellbar, der beispielsweise ein höhenverstellbares Stellglied aufweist, an dem schwenkbar ein Ende einer Stellstange angelenkt ist, die an ihrem anderen Ende an dem mittleren Element 5' angreift und dieses nach oben bzw. nach unten verstellt.

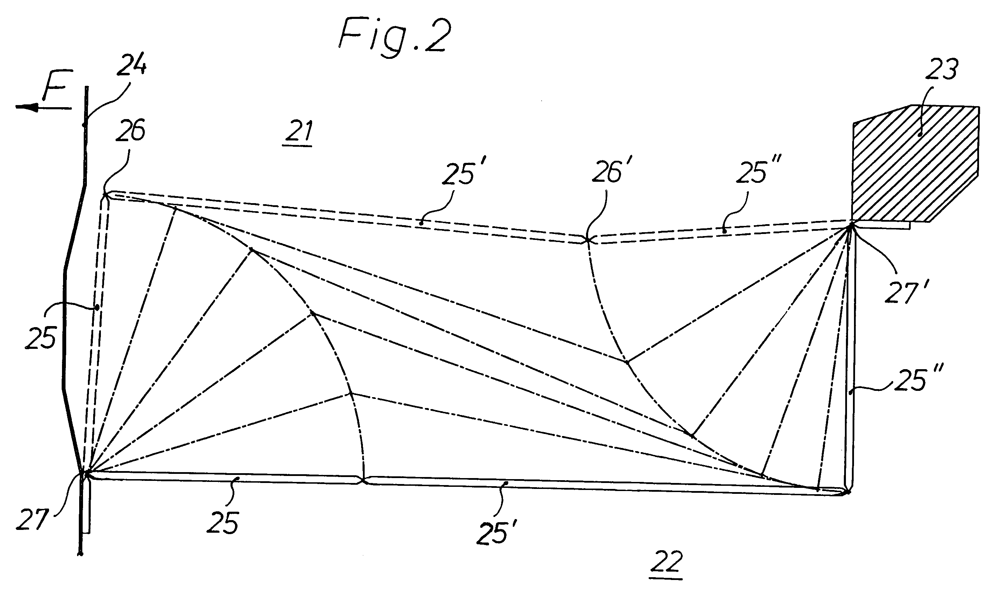

Ein zweites Ausführungsbeispiel der Erfindung ist in Figur 2 in einer Prinzipskizze dargestellt. Zwischen den beiden Ausführungsbeispielen vergleichbare Teile sind in Figur 2 mit einer um die Zahl 20 erhöhten Bezugszahl versehen, um eine erneute Beschreibung dieser Teile zu vermeiden. Bei dieser Ausführung sind die in Querrichtung des Fahrzeugs verlaufenden Achsen 26, 26' und die Schwenkachsen 27, 27' durch Filmscharniere oder dergleichen, beispielsweise Stoffnähte gebildet. Die Elemente 25, 25', 25'' können beispielsweise an ihrer dem Aufbewahrungsraum 22 zugewandten Seite von einer Stoffbahn oder dergleichen abgedeckt sein, die an den Enden einerseits an dem Querträger 23 und andererseits an der Querwand 24 befestigt ist. Durch strichtpunktierte Linien sind verschiedene Stellungen der Elemente 25, 25', 25'' beim Übergang von der unteren Beladungsstellung in die obere Beladungsstellung dargestellt. Bei dieser Ausführung sind zur Vereinfachung der Darstellung die Elemente 25, 25', 25'' als ebene plattenförmige Teile abgebildet. Ebenso könnten diese geformt oder bereichsweise abgewinkelt verlaufen.

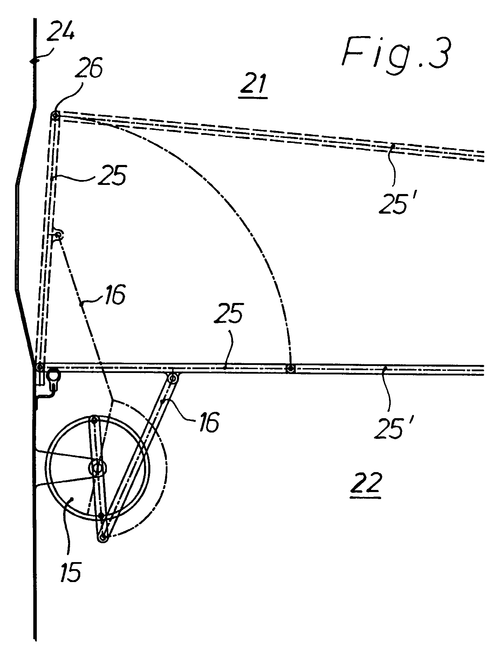

In die Darstellung gemäß Figur 3 wurde ein an der Querwand 24 abgestützter Antrieb 15 aufgenommen, der das Element 25 des zweiten Ausführungsbeispiels gemäß Figur 2 über eine gelenkig an dem Element 25 angreifende Kurbelstange 16 verstellt. Die untere Beladungsstellung ist durch ausgezogene Umrißlinien dargestellt, während durch unterbrochene Umrißlinien die obere Beladungsstellung angedeutet ist, in der das Faltverdeck nicht in den Aufbewahrungsraum 21 eingebracht ist.

Die Erfindung ist auch in einer von den beiden Ausführungsbeispielen abweichenden Weise realisierbar. Zum Verstellen der Elemente von einer ersten Beladungsstellung in eine zweite Beladungsstellung ist ein Motorenantrieb nicht erforderlich, beispielsweise wenn ein Federelement die Elemente in eine Beladungsstellung belastet und ein an einem Element anliegendes Teil beim Einbringen in einen Aufbewahrungsraum die Elemente in die andere Beladungsstellung selbsttätig verstellt. Die plattenförmigen Elemente können eben, gewölbt oder strukturiert ausgebildet sein. Die örtliche Zuordnung der beiden Aufbewahrungsräume ist an sich beliebig. Die plattenförmigen Elemente können eine unterschiedliche oder gleiche Größe aufweisen. Es ist nicht in jedem Fall erforderlich, daß die Schwenkachsen und die Achsen zueinander parallel verlaufen. An den Seitenbereichen der verstellbaren Trennwand können Klappen oder Abdeckungen angeordnet sein, die wie bei dem Ausführungsbeispiel in der oberen Beladungsstellung oder in einer unteren Beladungsstellung offene Seitenbereiche zwischen den Elementen und benachbarten Wandungsbereichen vollständig oder teilweise abdecken.

## Patentansprüche

1. Aufbewahrungseinrichtung, mit zwei über eine verstellbare Trennwand volumenveränderlichen Aufbewahrungsräumen, insbesondere an einem Cabriolet oder dergleichen, dadurch gekennzeichnet, daß die Trennwand drei plattenförmige Elemente (5, 5', 5'' bzw. 25, 25', 25'') aufweist, von denen ein mittleres Element (5' bzw. 25') an gegenüberliegenden Endbereichen jeweils um eine Achse (6, 6' bzw. 26, 26') schwenkbar mit einem äußeren Element (5, 5'' bzw. 25, 25'') verbunden ist, die jeweils am äußeren Endbereich um eine ortsfeste Schwenkachse (7, 7' bzw. 27, 27') schwenkbar befestigt sind, wodurch von den Elementen (5, 5', 5'' bzw. 25, 25', 25'') ein Viergelenk gebildet ist.

2. Aufbewahrungseinrichtung nach Anspruch 1, dadurch gekennzeichnet, daß die Achsen (6, 6' bzw. 26, 26') etwa parallel zu den Schwenkachsen (7, 7' bzw. 27, 27') verlaufen.

3. Aufbewahrungseinrichtung nach Anspruch 1 oder 2, dadurch gekennzeichnet, daß die beiden äußeren Elemente (5, 5'' bzw. 25, 25'') zwischen einer ersten und einer zweiten Beladungsstellung um jeweils etwa 90 ° schwenkbar sind.

4. Aufbewahrungseinrichtung nach Anspruch 3, dadurch gekennzeichnet, daß in der ersten Beladungsstellung die gedachten Verbindungsebenen zwischen den Achsen (6, 6' bzw. 26, 26') sowie einer Achse (6' bzw. 26') und der zugewandten Schwenkachse (7' bzw. 27') eines ersten äußeren Elements (5'' bzw. 25'') etwa parallel verlaufen und das zweite äußere Element (5 bzw. 25) hierzu etwa senkrecht steht.

5. Aufbewahrungseinrichtung nach Anspruch 4, dadurch gekennzeichnet, daß in der zweiten Beladungsstellung die gedachten Verbindungsebenen zwischen den Achsen (6, 6' bzw. 26, 26') sowie einer Achse (6 bzw. 26) und der zugewandten Schwenkachse (7 bzw. 27) des zweiten äußeren Elements (5 bzw. 25) etwa parallel verlaufen und das erste äußere Element (5'' bzw. 25'') hierzu etwa senkrecht steht.

6. Aufbewahrungseinrichtung nach Anspruch 4 oder 5, dadurch gekennzeichnet, daß in der ersten Beladungsstellung das mittlere Element (5' bzw. 25') erhöht und in der zweiten Beladungsstellung abgesenkt ist.

7. Aufbewahrungseinrichtung nach einem der Ansprüche 1 bis 6, die an einem Cabriolet oder dergleichen vorgesehen ist, dadurch gekennzeichnet, daß ein Aufbewahrungsraum (2 bzw. 22) ein hinterer Gepäckraum ist und der andere Aufbewahrungsraum (1 bzw. 21) ein vorne oberhalb des Gepäckraumes vorgesehener Verdeckkasten ist, in den das geöffnete Verdeck oder Faltdach einzubringen ist.

8. Aufbewahrungseinrichtung nach Anspruch 7, dadurch gekennzeichnet, daß die Achsen (6, 6' bzw. 26, 26') und Schwenkachsen (7, 7' bzw. 27, 27') in Fahrzeugquerrichtung verlaufen.

9. Aufbewahrungseinrichtung nach Anspruch 7 oder 8, dadurch gekennzeichnet, daß in der zweiten, abgesenkten Beladungsstellung die Elemente (5, 5', 5'') an einer Dichtung (9) von oben anliegen.

10. Aufbewahrungseinrichtung nach Anspruch 9, dadurch gekennzeichnet, daß die Dichtung (9) an einem zu den Elementen (5, 5', 5'') gerichteten Schenkel (10) einer Wasserrinne (11) befestigt ist, die an einer vorne den Gepäckraum begrenzenden Querwand (4) in Querrichtung sowie seitlich von den Elementen (5, 5', 5'') oben offen nach hinten und im hinteren Bereich des Verdeckkastens vorne offen nach oben verläuft.

11. Aufbewahrungseinrichtung nach einem der Ansprüche 1 bis 10, dadurch gekennzeichnet, daß im Bereich einer Achse (6) und/oder einer Schwenkachse eine biegsame Dichtung (13) an den betreffenden Elementen (5, 5') befestigt ist, die einen Wasserübertritt von einem Aufbewahrungsraum (1) in den anderen Aufbewahrungsraum (2) verhindert.

12. Aufbewahrungseinrichtung nach einem der Ansprüche 1 bis 11, dadurch gekennzeichnet, daß die Elemente (25, 25') über einen an einem Element (25) angreifenden Motor (Antrieb 15) verstellbar sind oder ein an einem Element angreifendes Federelement das mittlere Element nach oben belastet.

## Claims

1. A storage device comprising two storage compartments having a volume which can be varied by means of an adjustable partition, especially on a convertible or the like, characterised in that the partition comprises three plate-like components (5, 5', 5'' or 25, 25', 25''), a central component (5', 25') whereof is connected at opposite end regions around a respective pivot (6, 6' or 26, 26') in pivotable manner to an outer component (5, 5'' or 25, 25'') fastened at its outer end region so as to be pivotable around a stationary axis of rotation (7, 7' or 27, 27'), so that the components (5, 5', 5'' or 25, 25', 25'') form a four-bar linkage.

2. A storage device according to claim 1, characterised in that the pivots (6, 6' or 26, 26') extend approximately parallel to the axes of rotation (7, 7' or 27, 27').

3. A storage device according to claim 1 or claim 2, characterised in that the two outer components (5, 5'' or 25, 25'') are each pivotable through about 90° between a first and a second loading position.

4. A storage device according to claim 3, characterised in that in the first loading position the imaginary connecting planes between the pivots (6, 6' or 26, 26') and between a pivot (6' or 26') and the facing axis of rotation (7 or 27') of a first outer element (5'' or 25'') extend approximately parallel and the second outer element (5 or 25) is approximately at right angles thereto.

5. A storage device according to claim 4, characterised in that in the second loading position the imaginary connecting planes between the pivots (6, 6' or 26, 26') and between a pivot (6 or 26) and the facing axis of rotation (7 or 27) of the second outer component (5 or 25) extend approximately parallel and the first outer component (5' or 25') is approximately at right angles thereto.

6. A storage device according to claim 4 or claim 5, characterised in that the central component (5' or 25') is raised in the first loading position and lowered in the second loading position.

7. A storage device according to any of claims 1 to 6 provided on a convertible or the like, characterised in that one storage compartment (2 or 22) is a rear baggage chamber and the other storage compartment (1 or 21) is a casing disposed in front and above the storage chamber for receiving the opened folding top or folding roof.

8. A storage device according to claim 7, characterised in that the pivots (6, 6' or 26, 26') and the axes of rotation (7, 7' or 27, 27') extend in the transverse direction of the vehicle.

9. A storage device according to claim 7 or claim 8, characterised in that in the second, lowered loading position the components (5, 5', 5'') abut a seal (9) from above.

10. A storage device according to claim 9, characterised in that the seal (9) is fastened to one side (10), facing the components (5, 5', 5''), of a water channel (11) which is open at the top and towards the rear in the transverse direction at a transverse wall (4) bounding the luggage chamber in front and at the side of the components (5, 5', 5''), and is open upwardly at the front in the rear region of the folding-roof casing.

11. A storage device according to any of claims 1 to 1 0, characterised in that a flexible seal (13) is fastened to the appropriate components (5, 5') in the neighbourhood of a pivot (6) and/or of an axis of rotation and prevents water flowing from one storage compartment (1) into the other storage compartment (2).

12. A storage device according to any of claims 1 to 11, characterised in that the components (25, 25') are adjustable by a motor (drive 15) engaging a component (25) or a spring element engages a component and biases the central component upwards.

## Revendications

1. Dispositif de rangement, comportant deux espaces de rangement à volumes rendus variables, par l'intermédiaire d'une paroi de séparation réglable, en particulier sur un cabriolet ou analogue,
caractérisé en ce que
la paroi de séparation présente trois éléments (5, 5', 5'', respectivement 25, 25', 25'') en forme de plaques, dont un élément médian (5', respectivement 25') est relié à un élément extérieur (5, 5'', respectivement 25, 25''), de manière susceptible de pivoter autour d'un axe (6, 6', respectivement 26, 26') chaque fois sur deux zones d'extrémité opposées, les zones d'extrémité opposées étant fixées de façon à pouvoir pivoter autour d'un axe de pivotement (7, 7', respectivement 27, 27') localement fixe, situé chaque fois sur la zone extérieure, faisant qu'un quadrilatère articulé est constitué par les éléments (5, 5', 5'', respectivement 25, 25', 25'').

2. Dispositif de rangement selon la revendication 1,
caractérisé en ce que
les axes (6, 6', respectivement 26, 26') s'étendent à peu près parallèlement aux axes de pivotement (7, 7', respectivement 27, 27').

3. Dispositif de rangement selon la revendication 1 ou 2,
caractérisé en ce que
les deux éléments extérieurs (5, 5'', respectivement 25, 25'') sont susceptibles de pivoter chacun d'environ 90°, entre une première et une deuxième position de chargement.

4. Dispositif de rangement selon la revendication 3,
caractérisé en ce que
dans la première position de chargement, les plans de liaison imaginaires tracés entre les axes (6, 6', respectivement 26, 26'), ainsi qu'entre un axe (6', respectivement 26') et l'axe de pivotement (7', respectivement 27') afférent d'un premier élément extérieur (5'', respectivement 25'') s'étendent à peu près parallèlement, et le deuxième élément extérieur (5, respectivement 25) s'étend à peu près perpendiculairement par rapport à ceux-ci.

5. Dispositif selon la revendication 4,
caractérisé en ce que
dans la deuxième position de chargement, les plans de liaison imaginaires tracés entre les axes (6, 6', respectivement 26, 26'), ainsi qu'entre un axe (6, respectivement 26) et l'axe de pivotement (7, respectivement 27) afférent du deuxième élément extérieur (5, respectivement 25) s'étendent à peu près parallèlement et le premier élément extérieur (5'', respectivement 25'') s'étend à peu près perpendiculairement par rapport à ceux-ci.

6. Dispositif selon la revendication 4 ou 5, caractérisé en ce que
dans la première position de chargement, l'élément médian (5', respectivement 25') est levé et, dans la deuxième position de chargement, il est abaissé.

7. Dispositif selon l'une des revendications 1 à 6, prévu sur un cabriolet ou analogue,
caractérisé en ce qu'
un espace de chargement (2, respectivement 22) constitue un coffre à paquets arrière et l'autre espace de chargement (1, respectivement 21) constitue une boîte d'occultation prévue à l'avant et au-dessus du coffre à paquets, dans laquelle se loge la capote ouverte ou le toit pliant.

8. Dispositif selon la revendication 7,
caractérisé en ce que
les axes (6, 6', respectivement 26, 26') et les axes de pivotement (7, 7', respectivement 27, 27') s'étendent dans la direction transversale du véhicule.

9. Dispositif selon la revendication 7 ou 8,
caractérisé en ce que
les éléments (5, 5', 5'') appuient par le haut sur un joint d'étanchéité (9) lorsque l'on se trouve dans la deuxième position de chargement, abaissée.

10. Dispositif selon la revendication 9,
caractérisé en ce que
le joint d'étanchéité (9) est fixé sur une branche (10), tournée vers les éléments (5, 5', 5'') d'une gouttière à eau (11), s'étendant, sur une paroi transversale (4) délimitant à l'avant l'espace réservé aux paquets, en étant orientée dans la direction transversale, ainsi que s'étendant vers l'arrière, latéralement vis-à-vis des éléments (5, 5', 5''), en étant ouverte vers le haut, et en s'étendant dans la zone arrière du caisson à capote, en allant vers le haut et en étant ouverte vers l'avant.

11. Dispositif selon l'une des revendications 1 à 10,
caractérisé en ce que
dans la zone d'un axe (6) et/ou d'un axe de pivotement, un joint d'étanchéité (13) flexible est fixé sur les éléments (5, 5') concernés, empêchant tout débordement d'eau d'un espace de rangement (1) dans l'autre espace de rangement (2).

12. Dispositif selon l'une des revendications 1 à 11,
caractérisé en ce que
les éléments (25, 25') sont réglables par l'intermédiaire d'un moteur (entraînement 15) agissant sur un élément (25) ou bien un élément élastique, agissant sur un élément, charge vers le haut l'élément médian.
